# EUROPÄISCHE PATENTANMELDUNG

(11) **EP 4 610 870 A1**
(43) Veröffentlichungstag der Anmeldung: **03.09.2025**
(21) Anmeldenummer: 24159963.8
(22) Anmeldetag: 27.02.2024
(51) Int. Cl.: G06F 30/15, B60L 15/20, H02P 6/34, G06F 119/14

(54) **VERFAHREN ZUR AUSLEGUNG UND/ODER DIMENSIONIERUNG EINER ANTRIEBSVORRICHTUNG**

(71) Anmelder: Siemens Aktiengesellschaft, 80333 München (DE)
(72) Erfinder: Holland, Erwin, 90425 Nürnberg (DE); Leistner, Ralf, 90530 Wendelstein (DE)
(74) Vertreter: Siemens Patent Attorneys

(57) **Zusammenfassung**

Computerimplementiertes Verfahren zur Auslegung und/oder Dimensionierung
einer Antriebsvorrichtung (103) mit einem rotatorischen Elektromotor (106) und zumindest einen damit verbundenen Bestandteil (105, 107) umfasst, umfassend:
Festlegen der durch die Antriebsvorrichtung (103) zu bewegende Last (104),
Festlegen der Parameter des Elektromotors (106) und des weiteren Bestandteils (105, 107) der Antriebsvorrichtung (103) entsprechend der zu bewegenden Last (104),
Bereitstellung der M-n-Kurve (202) des Elektromotors (106),

Berechnung der M-n-Kurve des weiteren Bestandteils (105, 107) unter Verwendung zumindest eines den weiteren Bestandteil charakterisierenden Parameters berechnet wird,
Bestimmung des maximalen Hochlaufdrehmoments (201) der Antriebsvorrichtung (103) anhand der M-n-Kurven (202, 203, 204),
gleichzeitige graphische Darstellung der M-n-Kurven (202, 203, 204) sowie das maximale Hochlaufdrehmoment (201), sodass jede dargestellte Abhängigkeit jeweils dem Elektromotor oder dem weiteren Bestandteil der Antriebsvorrichtung eindeutig zugeordnet wird.

## Beschreibung

Die Erfindung betrifft ein computerimplementiertes Verfahren zur Auslegung und/oder Dimensionierung einer Antriebsvorrichtung und ein Computerprogrammprodukt mit den Befehlen zum Ausführen des Verfahrens.

Die Auslegung und Dimensionierung von Antriebsvorrichtungen ist ein entscheidender Schritt in der Konstruktion und Implementierung von Maschinen und Anlagen. Diese Prozesse sind von grundlegender Bedeutung für die Effizienz, Leistungsfähigkeit und Zuverlässigkeit der gesamten Anlage. Die Auswahl der richtigen Antriebskomponenten, wie Motoren, Getriebe und Steuerungen, hängt von verschiedenen Faktoren ab, darunter die Art der Anwendung, die erforderliche Leistung, die Umgebungsfaktoren und nicht zuletzt die Sicherheitsanforderungen.

In der Industrie werden Antriebsvorrichtungen in einer Vielzahl von Anwendungen eingesetzt, von einfachen Förderbändern bis hin zu hochkomplexen Robotersystemen. Eine präzise Auslegung ist in Bereichen wie der Fertigungsautomatisierung, der Materialverarbeitung, der Logistik und vielen anderen unerlässlich. Die Optimierung von Antriebssystemen trägt nicht nur zur Effizienzsteigerung und Kosteneinsparung bei, sondern kann auch die Produktqualität verbessern und die Sicherheit am Arbeitsplatz erhöhen.

Bei der Auslegung von Antriebsvorrichtungen können verschiedene Aspekte berücksichtigt werden, darunter die Lastanforderungen, die Beschleunigungs- und Geschwindigkeitsprofile, die Umgebungsfaktoren wie Temperatur und Feuchtigkeit, sowie die Integration in das Gesamtsystem.

Die Auslegung und Dimensionierung von Antriebsvorrichtungen wird oft mithilfe von spezialisierten Softwaretools und Simulationsprogrammen - auch als Auslegungstools genannt - durchgeführt. Diese Tools ermöglichen Ingenieuren, komplexe Berechnungen durchzuführen, verschiedene Szenarien zu analysieren und die Leistungsfähigkeit des Antriebssystems vorab zu bewerten. Darüber hinaus können Ingenieure (Benutzer) auf ihre Fachkenntnisse und Erfahrungen zurückgreifen, um die richtigen Entscheidungen bei der Auswahl und Konfiguration der Antriebskomponenten zu treffen.

Nachteilhaft bei vielen herkömmlichen Auslegungstools, welchen computerimplementierte Verfahren zugrunde liegen, dass die Benutzer noch über erhebliches Fachwissen verfügen müssen, um eine Entscheidung zu treffen und werden durch die Tools an die Entscheidung nicht ausreichend herangeführt.

Die Aufgabe der vorliegenden Erfindung besteht darin, ein Verfahren bereitzustellen, dass ein zuverlässiges Heranführen des Benutzers an eine Entscheidung ermöglicht.

Mit anderen Worten besteht die Aufgabe darin, ein zuverlässiges "Assistenzsystem" zu schaffen, das den Benutzer bei dem Auslegen und/oder Dimensionieren von Antriebsvorrichtungen interaktiv begleitet.

Die Aufgabe wird mit einem Verfahren der vorgenannten Art gelöst, wobei die Antriebsvorrichtung einen rotatorischen Elektromotor und zumindest einen weiteren mit dem Elektromotor mechanisch und/oder elektrisch verbundenen Bestandteil umfasst, und dazu ausgebildet ist, ihr zugeführten Strom in eine mechanische Bewegung umzusetzen, um eine an die Antriebsvorrichtung angeschlossene Last zu bewegen, wobei
die durch die Antriebsvorrichtung zu bewegende Last, beispielsweise durch eine Benutzereingabe, festgelegt wird,
der rotatorische Elektromotor und der weitere Bestandteil der Antriebsvorrichtung entsprechend der zu bewegenden Last, beispielsweise durch eine Benutzereingabe, festgelegt werden,
eine auf den Elektromotor bezogene Abhängigkeit des Drehmoments von der Drehzahl bereitgestellt wird,
eine auf den weiteren Bestandteil bezogene Abhängigkeit des Drehmoments von der Drehzahl unter Verwendung zumindest eines den weiteren Bestandteil charakterisierenden Parameters berechnet wird,
maximales Hochlaufdrehmoment der Antriebsvorrichtung anhand der auf den Elektromotor bezogenen Abhängigkeit und der auf den weiteren Bestandteil bezogenen Abhängigkeit bestimmt wird, und
die auf den Elektromotor bezogene Abhängigkeit, die auf den weiteren Bestandteil bezogene Abhängigkeit und das maximale Hochlaufdrehmoment gleichzeitig derart graphisch dargestellt werden, dass jede dargestellte Abhängigkeit jeweils dem Elektromotor oder dem weiteren Bestandteil der Antriebsvorrichtung eindeutig zugeordnet wird.

Durch eine solche graphische Darstellung wird dem Benutzer sogleich ersichtlich, welche der gewählten Bestandteile oder Parameter der Antriebsvorrichtung ihr maximales Hochlaufdrehmoment begrenzen.

Es kann zweckdienlich sein, wenn beim Abweichen des maximalen verfügbaren Hochlaufdrehmoments von der auf den Elektromotor bezogenen Abhängigkeit und/oder der auf den weiteren Bestandteil bezogenen Abhängigkeit vorgeschlagen wird, den Elektromotor und/oder den weiteren Bestandteil zu ersetzen.

Darüber hinaus kann es vorgesehen sein, dass anhand des maximalen Hochlaufdrehmoments eine Abhängigkeit der Ramp-Up- oder/und der Ramp-Down-Zeit von der Drehzahl des Elektromotors berechnet und angezeigt wird.

Dabei kann es zweckmäßig sein, wenn die berechnete Ramp-Up- oder/und Ramp-Down-Zeit mit einem entsprechenden vorgegebenen Grenzwert verglichen wird und beim Über- beziehungsweise Unterschreiten des Werts vorgeschlagen wird, den Elektromotor und/oder den weiteren Bestandteil zu ersetzen.

Außerdem kann es zweckdienlich sein, ein Bewegungsprofil zu erstellen, wobei
das Bewegungsprofil eine Bewegung der festgelegten zu bewegenden Last innerhalb einer vorgegebenen Zeit beschreibt, wobei beim Erstellen des Bewegungsprofils das maximale Hochlaufdrehmoment verwendet wird, wobei für das Bewegungsprofil eine thermische Last auf die Antriebsvorrichtung berechnet wird, und, wenn die thermische Last einen vorgegebenen thermischen Grenzwert überschreitet, eine Warnung generiert und an einen Benutzer und/oder an ein automatisiertes Kontrollsystem ausgegeben wird.

Darüber hinaus kann mit Vorteil vorgesehen sein, dass auf den Elektromotor bezogene Abhängigkeit des Drehmoments von der Drehzahl an zumindest einen vorgegebenen umgebungs- und/oder anwendungsspezifischen Parameter angepasst wird.

Außerdem kann es zweckmäßig sein, wenn das maximale Hochlaufdrehmoment der Antriebsvorrichtung als Minimum aus der auf den Elektromotor bezogenen Abhängigkeit und der auf den weiteren Bestandteil bezogenen Abhängigkeit bestimmt wird.

Der weitere Bestandteil kann beispielsweise ein Umrichter oder ein Getriebe sein.

Darüber hinaus kann der Parameter ein Umrichter-Ausgangsstrom oder das maximale Getriebeabtriebsmoment umgerechnet auf die Motorseite beziehungsweise das maximale Eintriebsmoment des Getriebeadapters sein.

Es kann mit Vorteil vorgesehen sein, dass das maximale Hochlaufdrehmoment der Antriebsvorrichtung zusätzlich anhand einer maximalen am Motor verfügbaren Leistung bestimmt wird.

Weitere Merkmale, Eigenschaften und Vorteile der vorlie-genden Erfindung ergeben sich aus der nachfolgenden Be-schreibung unter Bezugnahme auf die beiliegenden Figuren. Darin zeigen schematisch:
- FIG 1: eine industrielle Umgebung,
- FIG 2: graphische Darstellung,
- FIG 3: Ramp-Up- und Ramp-Down-Zeiten, und
- FIG 4: Bewegungsprofil

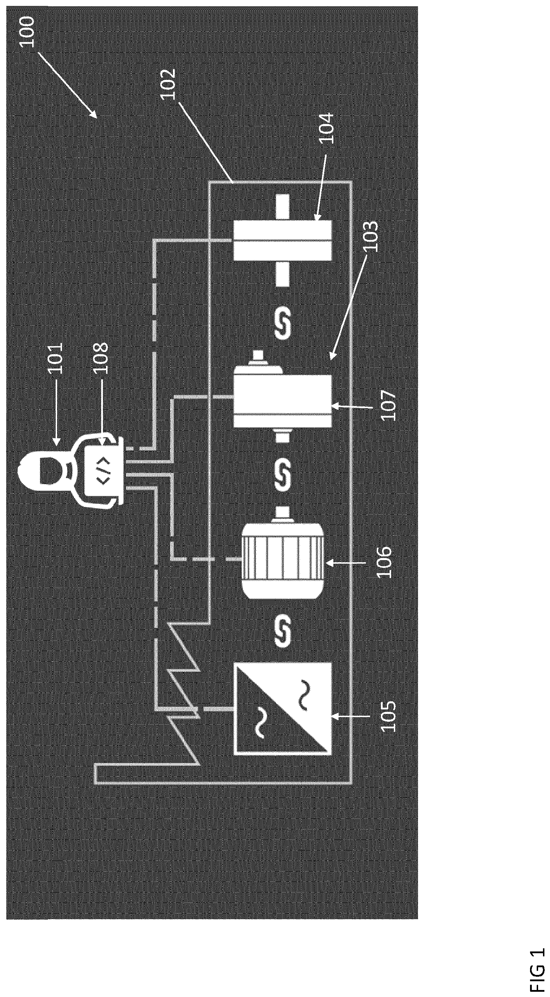

FIG 1 veranschaulicht eine industrielle Umgebung, in der das computerimplementierte Verfahren typischerweise seine Anwendung findet.

Ein Ingenieur, beispielsweise ein Automatisierungstechniker 101 plant ein Projekt in einer industriellen Umgebung, insbesondere in einer Produktionsanlage 102. Bei der Automatisierung werden Antriebsvorrichtungen 103 eingesetzt, welche dazu vorgesehen sind, eine Last 104 zu bewegen. Hierzu werden Antriebsvorrichtungen 103 mit Strom gespeist und setzen die ihnen zugeführte Energie in eine mechanische Bewegung der Last 104 um.

Die Antriebsvorrichtung 103 muss der Last 104 entsprechen, d.h., sie muss entsprechend ausgelegt und/oder dimensioniert sein.

Die Last 104 kann unterschiedlich ausgebildet sein. Dies kann beispielsweise eine Achse einer Werkzeugmaschine, eine Pumpe oder ein anderer mechanisch bewegbarer Teil der Automatisierungsanlage sein.

Die Antriebsvorrichtung 103 umfasst typischerweise zwei oder mehrere Elemente. In FIG 1 setzt sich die Antriebsvorrichtung aus drei miteinander verbundenen Bestandteilen: einem Umrichter 105, einem rotatorischen Elektromotor 106 und einem Getriebe 107 - einer mechanischen Vorrichtung, die dazu dient, die Drehzahl und das Drehmoment zwischen dem Elektromotor 106 und der Last 104 zu verändern.

Um die Antriebsvorrichtung 103 für die Last 104 entsprechend auszulegen und/oder zu dimensionieren wird ein computerimplementiertes Verfahren vorgeschlagen.

Das Verfahren kann durch einen Computer 108 ausgeführt werden. Hierzu umfasst der Computer 108 üblicherweise ein Computerprogramm mit entsprechenden Befehlen, die, wenn sie durch den Computer 108 abgearbeitet werden, diesen dazu veranlassen, das computerimplementierte Verfahren durchzuführen und die Antriebsvorrichtung 103 auszulegen und/oder zu dimensionieren.

Es versteht sich, dass der Computer 108 und/oder das Computerprogramm nicht in oder an der Anlage 102 sein muss, es kann ein Remote-Rechner, Cloud-Server o.Ä. sein. Das Computerprogramm muss nicht auf dem Computer 108 gespeichert sein, sondern kann ebenfalls in einer Cloud vorliegen, sodass ein Benutzer 101 auf das Programm remote zugreifen kann.

Bei dem Verfahren wird zunächst die durch die Antriebsvorrichtung 103 zu bewegende Last 104 festgelegt. Vorliegend kann dies durch eine Benutzereingabe erfolgen. Dabei muss der Benutzer lediglich einen Schätzwert eingeben, der eine auf die Motorwelle bezogene Lastträgheit festlegt.

Anschließend werden der Elektromotor 106 und zumindest ein weiterer Bestandteil der Antriebsvorrichtung 103 - also in FIG 1 der Umrichter 105 oder das Getriebe 107 - entsprechend der zu bewegenden Last 104 festgelegt. Dies kann ebenfalls durch eine Benutzereingabe am Computer 108 erfolgen. Dabei können alle Bestandteile, d.h. der Umrichter 105, der Elektromotor 106, das Getriebe 107 aber auch Verbindungskabel, Stromversorgungsvorrichtungen, die dem Umrichter 105 vorgeschalten sein können, und viel mehr aus einer Datenbank (hier nicht gezeigt) gewählt werden. Die Datenbank kann entweder lokal am Computer 108 oder remote, z.B. auf einem Sever in der Cloud, vorgesehen sein.

Das Festlegen des Elektromotors 106, des Umrichters 105 oder des Getriebes 107 erfolgt durch Abrufen der entsprechenden den jeweiligen Bestandteil der Antriebsvorrichtung 103 beschreibenden Parameter.

Anschließend wird eine auf den Elektromotor 106 bezogene Abhängigkeit des Drehmoments von der Drehzahl oder kurz Motor-Maximaldrehmoment-Kennlinie bereitgestellt. Die den Elektromotor charakterisierende Motor-Maximaldrehmoment-Kennlinie kann ebenfalls aus der Datenbank eingelesen werden.

Es kann dabei mit Vorteil vorgesehen sein, dass die Motor-Maximaldrehmoment-Kennlinie an zumindest einen vorgegebenen (z.B. von dem Benutzer 101) umgebungs- und/oder anwendungsspezifischen Parameter vorzugsweise automatisch angepasst wird.

Als nächstes wird jeweils eine Abhängigkeit des Drehmoments von der Drehzahl für den Umrichter 105 und für das Getriebe 107 berechnet. Die entsprechende Abhängigkeit wird unter Verwendung eines Parameters berechnet, der den Umrichter 105 oder das Getriebe 107 entsprechend charakterisiert. Beispielsweise kann der Parameter ein (verfügbarer beziehungsweise maximaler) Umrichter-Ausgangsstrom oder das maximale Getriebeabtriebsmoment, das auf die Motorseite umgerechnet ist, beziehungsweise das maximale Eintriebsmoment des Getriebeadapters sein.

Die Motor-Maximaldrehmoment-Kennlinie und die vorgenannten Abhängigkeiten begrenzen das maximale Hochlaufdrehmoment der gesamten Antriebsvorrichtung 103. Sie stellen jeweils eine obere Grenze dar.

In dem nächsten Schritt wird das maximale Hochlaufdrehmoment anhand der Motor-Maximaldrehmoment-Kennlinie, der auf den Umrichter 105 bezogenen Abhängigkeit und der auf das Getriebe 107 bezogenen Abhängigkeit bestimmt.

Das maximale Hochlaufdrehmoment kann beispielsweise als Minimum aus der Motor-Maximaldrehmoment-Kennlinie und den Abhängigkeiten für den Umrichter 105 und für das Getriebe 107 bestimmt werden.

Darüber hinaus kann es vorgesehen sein, dass das maximale Hochlaufdrehmoment der Antriebsvorrichtung zusätzlich anhand einer maximalen am Motor 106 verfügbaren Leistung bestimmt wird. Diese Leistung bildet eine weitere Obergrenze für das maximale Hochlaufdrehmoment der gesamten Antriebsvorrichtung 103.

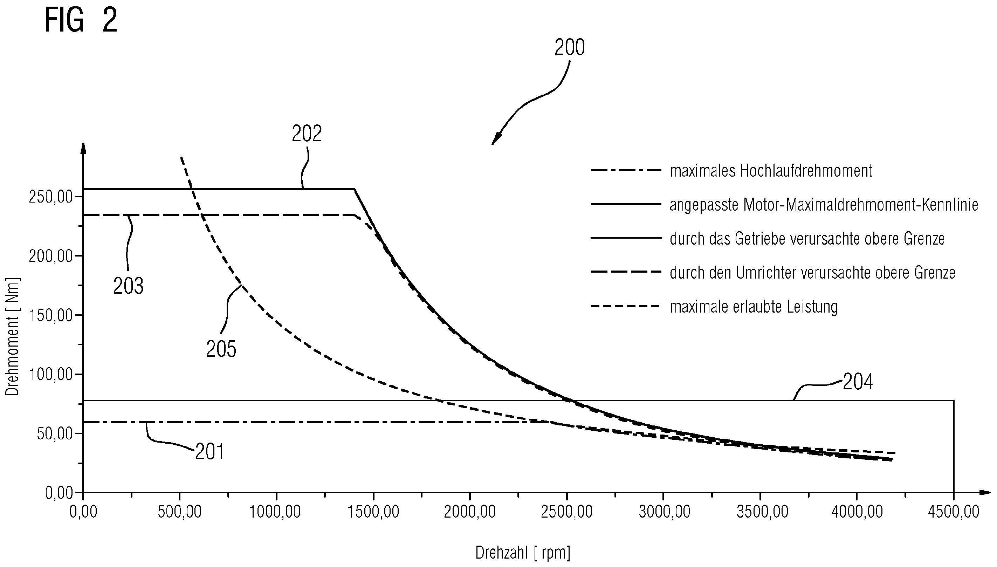

Nachdem das maximale Hochlaufdrehmoment berechnet wurde, werden die Motor-Maximaldrehmoment-Kennlinie, die Abhängigkeiten für den Umrichter 105 und für das Getriebe 107 und eventuell die maximale am Motor 106 verfügbare Leistung gemeinsam und gleichzeitig mit dem maximalen Hochlaufdrehmoment graphisch so dargestellt, dass jede dargestellte Abhängigkeit jeweils dem Umrichter 105, dem Elektromotor 106, dem Getriebe 107 oder der maximalen verfügbaren Motorleistung eindeutig zugeordnet werden (siehe FIG 2).

Mit anderen Worten erfolgt eine Generierung einer graphischen Darstellung 200 des berechneten maximalen Hochlaufdrehmoments 201 und aller verfügbaren Obergrenzen, die durch den entsprechenden Bestandteil der Antriebsvorrichtung 103 bedingt sind (durch den Elektromotor 106 - die Grenze 202 (in Schwarz); durch den Umrichter 105 - die Grenze 203 (in Grün); durch das Getriebe - die Grenze 204 (in Grau) und durch die maximale erlaubte Leistung - die Grenze 205 (in Orange), wobei das maximale Hochlaufdrehmoment 201 und die verfügbaren Obergrenzen 202 bis 205 gleichzeitig sichtbar gemacht werden.

Es kann darüber hinaus vorgesehen sein, dass die einzelnen Obergrenzen als Reaktion auf eine entsprechende Benutzereingabe aus- und wieder eingeblendet werden.

Bei der Berechnung des maximalen Hochlaufdrehmoments 201 können noch weitere Parameter, beispielsweise durch den Benutzer 101, eingegeben und berücksichtigt werden. Zum Beispiel kann es zweckdienlich sein, ein Reibmoment vorzugeben. Durch die Reibung wird das maximale Hochlaufdrehmoment 201 vermindert und steht nicht für die Beschleunigung zur Verfügung. Dies ist in FIG 2 veranschaulicht, in welcher das maximale Hochlaufdrehmoment 201 in einem Drehzahlbereich zwischen 0 rpm und etwa 1750 rpm noch kleiner als das maximal verfügbare Moment des Getriebes 107 ist.

Auch weitere zusätzliche Eingaben denkbar, die das Drehmoment begrenzen. Es kann beispielsweise zweckmäßig sein, wenn zusätzlich eine Drehmomentgrenze eingegeben wird, die für die anzutreibende Mechanik gilt. Hierdurch ergebendes maximales Hochlaufdrehmoment kann bei der Rechnung als zusätzliche Grenze berücksichtigt werden.

Die graphische Darstellung 200 kann auf einem Anzeigemittel, beispielsweise auf einem Bildschirm des Computers 108, und insbesondere gegenüber dem Benutzer 101 erfolgen. Es ist durchaus denkbar, weitere graphische und/oder akustische Signale zu generieren, die die Aufmerksamkeit des Benutzers 101 auf die graphische Darstellung 200 lenken.

Die eindeutige Zuordnung kann beispielsweise mittels unterschiedlicher Einfärbung der jeweiligen Obergrenzen erfolgen. Dies ist in FIG 2 verdeutlicht.

Die gleichzeitige Darstellung 200 des maximalen Hochlaufdrehmoments 201 und der entsprechenden Obergrenzen 202 bis 205, so dass die jeweilige Obergrenze eindeutig dem entsprechenden Bestandteil 105, 106, 107 der Antriebsvorrichtung 103 zugeordnet wird, wird eine zuverlässige Führung des Benutzers 101 durch den Prozess der Auslegung und/oder Dimensionierung der Antriebsvorrichtung 103 gewährleistet.

Beispielsweise ist auf diese Weise sofort erkennbar, welcher Bestandteil 105, 106, 107 der Antriebsvorrichtung 103 dazu führt, dass beispielsweise der ausgewählte Elektromotor 106 nicht optimal ausgenutzt wird.

Beispielsweise kann beim Abweichen des maximalen verfügbaren Hochlaufdrehmoments 201 von einer oder mehreren Obergrenzen 202 bis 205 vorgeschlagen werden, den Umrichter 105, den Elektromotor 106 oder das Getriebe 107 zu ersetzen, beispielsweise anders zu dimensionieren, oder dafür zu sorgen, dass die maximale erlaubte Leistung erhöht wird.

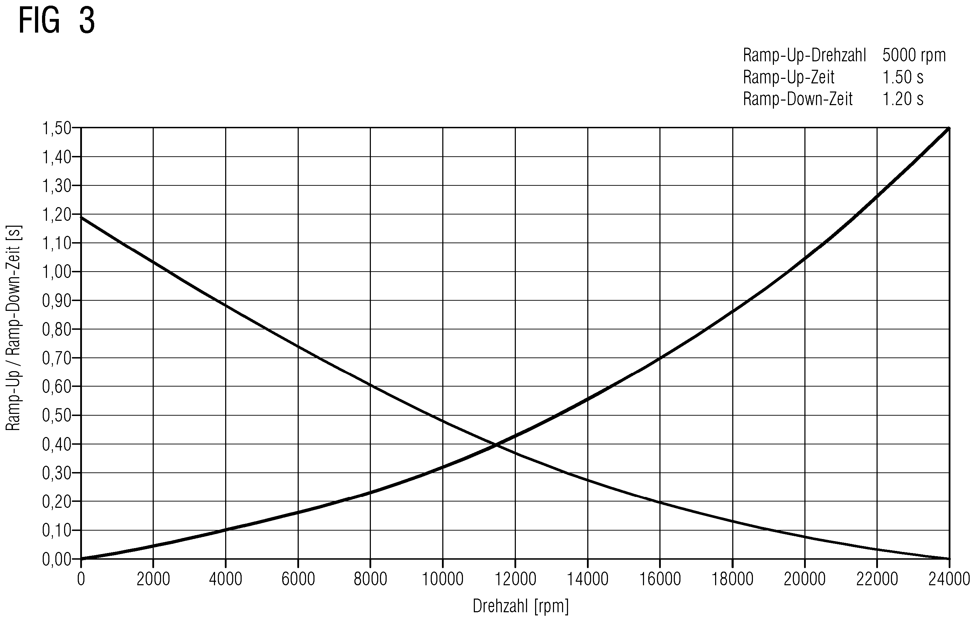

Darüber hinaus kann anhand des maximalen Hochlaufdrehmoments eine Abhängigkeit der Ramp-Up- oder/und der Ramp-Down-Zeit von der Drehzahl des Elektromotors 106 berechnet und angezeigt werden (siehe FIG 3).

Dabei kann die berechnete Ramp-Up- oder/und Ramp-Down-Zeit mit einem entsprechenden vorgegebenen Grenzwert verglichen wird und beim Über- beziehungsweise Unterschreiten des Werts vorgeschlagen wird, den Umrichter 105, den Elektromotor 106 oder das Getriebe 107 zu ersetzen.

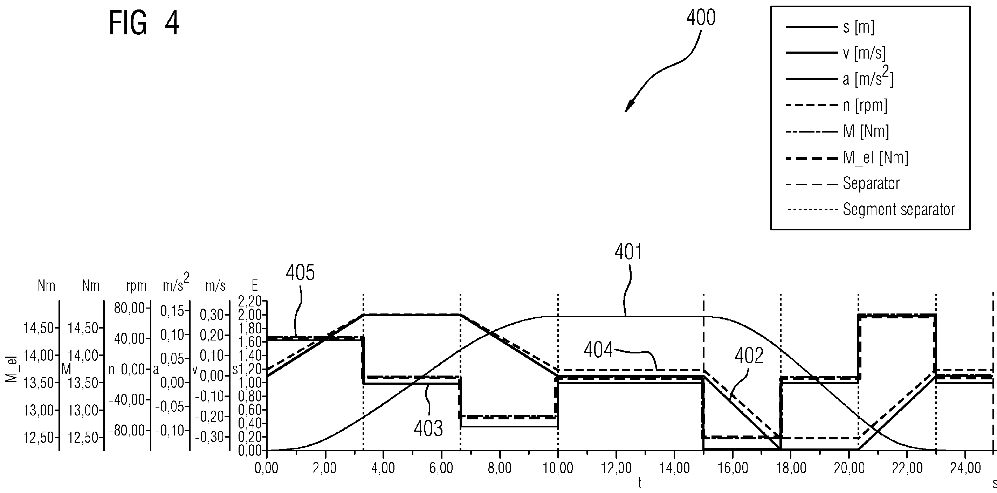

Darüber hinaus ist es möglich ein Bewegungsprofil 400 zu erstellen und dieses anzuzeigen (FIG 4). Gezeigt sind:
eine durch Bewegung zurückgelegte Distanz "s" 401 in Meter als Funktion der Zeit "t",
die Geschwindigkeit "v" 402 (der Last 104) in Meter pro Sekunde als Funktion der Zeit "t",
die Beschleunigung "a" 403 in Meter pro Sekunde zum Quadrat als Funktion der Zeit "t",
die Drehzahl "n" 404 in Umdrehungen pro Minute als Funktion der Zeit "t", und
das Drehmoment "M" 405 in Newton mal Meter als Funktion der Zeit "t".

Das Bewegungsprofil beschreibt eine Bewegung der festgelegten zu bewegenden Last 104 innerhalb einer vorgegebenen Zeit - hier 25 Sekunden.

Dabei wird beim Erstellen des Bewegungsprofils das maximale Hochlaufdrehmoment 201 verwendet. Für das Bewegungsprofil wird eine thermische Last auf die Antriebsvorrichtung berechnet, und, wenn die thermische Last einen vorgegebenen thermischen Grenzwert überschreitet, eine Warnung generiert und an einen Benutzer 101 und/oder an ein automatisiertes Kontrollsystem ausgegeben.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und vice versa.

*Unabhängig vom grammatikalischen Geschlecht eines bestimmten Begriffes sind Personen mit männlicher, weiblicher oder anderer Geschlechteridentität mit umfasst.*

## Patentansprüche

1. Computerimplementiertes Verfahren zur Auslegung und/oder Dimensionierung einer Antriebsvorrichtung (103), die einen rotatorischen Elektromotor (106) und zumindest einen weiteren mit dem Elektromotor (106) mechanisch und/oder elektrisch verbundenen Bestandteil (105, 107) umfasst, und dazu ausgebildet ist, ihr zugeführten Strom in eine mechanische Bewegung umzusetzen, um eine an die Antriebsvorrichtung (103) angeschlossene Last (104) zu bewegen,
die durch die Antriebsvorrichtung (103) zu bewegende Last (104) festgelegt wird,
der rotatorische Elektromotor (106) und der weitere Bestandteil (105, 107) der Antriebsvorrichtung (103) entsprechend der zu bewegenden Last (104) festgelegt werden,
eine auf den Elektromotor (106) bezogene Abhängigkeit (202) des Drehmoments von der Drehzahl bereitgestellt wird,
eine auf den weiteren Bestandteil (105, 107) bezogene Abhängigkeit (203, 204) des Drehmoments von der Drehzahl unter Verwendung zumindest eines den weiteren Bestandteil charakterisierenden Parameters berechnet wird,
maximales Hochlaufdrehmoment (201) der Antriebsvorrichtung (103) anhand der auf den Elektromotor (106) bezogenen Abhängigkeit (202) und der auf den weiteren Bestandteil (105, 107) bezogenen Abhängigkeit (203, 204) bestimmt wird,
die auf den Elektromotor (106) bezogene Abhängigkeit (202), die auf den weiteren Bestandteil (105, 107) bezogene Abhängigkeit (203, 204) und das maximale Hochlaufdrehmoment (201) gleichzeitig derart graphisch dargestellt werden, dass jede dargestellte Abhängigkeit jeweils dem Elektromotor oder dem weiteren Bestandteil der Antriebsvorrichtung eindeutig zugeordnet wird.

2. Verfahren nach Anspruch 1, wobei beim Abweichen des maximalen verfügbaren Hochlaufdrehmoments (201) von der auf den Elektromotor (106) bezogenen Abhängigkeit (201) und/oder der auf den weiteren Bestandteil (105, 107) bezogenen Abhängigkeit (203, 204) vorgeschlagen wird, den Elektromotor (106) und/oder den weiteren Bestandteil (105, 107) zu ersetzen.

3. Verfahren nach Anspruch 1 oder 2, wobei anhand des maximalen Hochlaufdrehmoments (201) eine Abhängigkeit der Ramp-Up- oder/und der Ramp-Down-Zeit von der Drehzahl des Elektromotors (106) berechnet und angezeigt wird.

4. Verfahren nach Anspruch 3, die berechnete Ramp-Up- oder/und Ramp-Down-Zeit mit einem entsprechenden vorgegebenen Grenzwert verglichen wird und beim Über- beziehungsweise Unterschreiten des Werts vorgeschlagen wird, den Elektromotor (106) und/oder den weiteren Bestandteil (105, 107) zu ersetzen.

5. Verfahren nach einem der Ansprüche 1 bis 4, wobei ein Bewegungsprofil erstellt wird, wobei
das Bewegungsprofil (400) eine Bewegung der festgelegten zu bewegenden Last (104) innerhalb einer vorgegebenen Zeit beschreibt, wobei
beim Erstellen des Bewegungsprofils (400) das maximale Hochlaufdrehmoment (201) verwendet wird, wobei
für das Bewegungsprofil (400) eine thermische Last auf die Antriebsvorrichtung (103) berechnet wird, und, wenn die thermische Last einen vorgegebenen thermischen Grenzwert überschreitet, eine Warnung generiert und an einen Benutzer (101) und/oder an ein automatisiertes Kontrollsystem ausgegeben wird.

6. Verfahren nach einem der Ansprüche 1 bis 5, wobei auf den Elektromotor (106) bezogene Abhängigkeit (202) des Drehmoments von der Drehzahl an zumindest einen vorgegebenen umgebungs- und/oder anwendungsspezifischen Parameter angepasst wird.

7. Verfahren nach einem der Ansprüche 1 bis 6, wobei das maximale Hochlaufdrehmoment (201) der Antriebsvorrichtung als Minimum aus der auf den Elektromotor (106) bezogenen Abhängigkeit (202) und der auf den weiteren Bestandteil (105, 107) bezogenen Abhängigkeit (203, 204) bestimmt wird.

8. Verfahren nach einem der Ansprüche 1 bis 7, wobei der weitere Bestandteil ein Umrichter (105) oder ein Getriebe (107) ist.

9. Verfahren nach einem der Ansprüche 1 bis 8, wobei der Parameter ein Umrichter-Ausgangsstrom oder das maximale Getriebeabtriebsmoment umgerechnet auf die Motorseite beziehungsweise das maximale Eintriebsmoment des Getriebeadapters ist.

10. Verfahren nach einem der Ansprüche 1 bis 9, wobei das maximale Hochlaufdrehmoment (201) der Antriebsvorrichtung zusätzlich anhand einer maximalen am Motor verfügbaren Leistung (205) bestimmt wird.

11. Computerprogrammprodukt umfassend Befehle, die, wenn sie durch einen Computer abgearbeitet werden, diesen dazu veranlassen, ein Verfahren nach einem der Ansprüche 1 bis 10 durchzuführen.
